(19) Europäisches Patentamt
European Patent Office
Office européen des brevets

(11) Publication number: 0 621 309 A1

# EUROPEAN PATENT APPLICATION

(21) Application number: 94104963.7

(22) Date of filing: 29.03.94

(51) Int. Cl.5: **C08L 23/16**, C08K 3/04,
//(C08L23/16,91:00,C08K3:04)

(30) Priority: 02.04.93 JP 76831/93

(43) Date of publication of application:
26.10.94 Bulletin 94/43

(84) Designated Contracting States:
DE ES FR GB IT NL

(71) Applicant: SUMITOMO CHEMICAL COMPANY, LIMITED
5-33, Kitahama 4-chome
Chuo-ku
Osaka (JP)

(72) Inventor: Yamamoto, Keisaku
5-3-14, Aobadai,
Ichihara-shi
Chiba (JP)
Inventor: Wakatsuki, Kizuku Shiizu-ryo,
832, Shiizu,
Ichihara-shi
Chiba (JP)
Inventor: Iketani, Kohichi
6-22-5, Aobadai
Ichihara-shi
Chiba (JP)

(74) Representative: VOSSIUS & PARTNER
Siebertstrasse 4
D-81675 München (DE)

(54) Rubber compositions for vibration insulator rubbers.

(57) The present invention provides an ethylene-α-olefin-non-conjugated diene copolymer rubber composition comprising:

(A) an oil-extended ethylene-α-olefin-non-conjugated diene copolymer wherein the copolymer has an intrinsic viscosity [$\eta$] of 2.7 to 3.8 measured in xylene at 70°C prior to oil extension, and the amount of the extension oil is in the range from 30 to 50 parts by weight per 100 parts by weight of the ethylene-α-olefin-non-conjugated diene copolymer;

(B) carbon black in an amount of 50 to 100 parts by weight per 100 parts by weight of the ethylene-α-olefin-non-conjugated diene copolymer; and

(C) process oil in an amount of 1/8 to 1/2 part by weight per 1 part by weight of the carbon black, and a vibration insulator rubber having a low dynamic/static ratio as well as a prolonged stretch fatigue life which is obtainable from said ethylene-α-olefin-non-conjugated diene copolymer rubber composition.

The present invention relates to a rubber composition for vibration insulator rubbers, and to a vibration insulator rubber obtained therefrom. More particularly, it relates to an ethylene-α-olefin-non-conjugated diene copolymer rubber composition having a good kneading processability, and to a vibration insulator rubber prepared therefrom, which has a good dynamic/static ratio characteristic and a prolonged stretch fatigue life.

It has been known that ethylene-α-olefin-non-conjugated diene copolymer rubbers, such as an ethylene-propylene-non-conjugated diene rubber, are excellent in thermal aging resistance, ozone resistance and polar solvent resistance.

The dynamic/static ratio property, i.e. damping property is one of the most important properties required for vibration insulator rubbers. The dynamic/static ratio is defined as the ratio of the dynamic spring constant to the static spring constant of a vibration insulator rubber.

The dynamic/static ratio, which is always larger than 1, indicates the degree of frequency dependence of vibration insulating performance. The higher the dynamic/static ratio a vibration insulator rubber has, the higher the frequency dependence the vibration insulator rubber suffers in its vibration insulating performance.

Accordingly, having a high frequency dependence is disadvantageous for a vibration insulator rubber because, when a vibration insulator rubber designed to exert maximum vibration insulating effects at a certain range of frequency is loaded with vibrations of frequencies outside said frequency range, the vibration insulator rubber does not exert a sufficient vibration insulating effect.

In other words, vibration insulator rubbers should exert a satisfactory vibration insulating effect against vibrations of a wide range of frequencies and hence should have a low dynamic/static ratio. This is very important, especially for vibration insulator rubbers which are employed under conditions where the frequency of vibrations varies, e.g. vibration insulator rubbers for automobiles in which the frequency of vibrations varies depending on the number of revolutions of the engine, and vibration insulator rubbers for washing machines where the frequency of vibrations varies depending on the number of revolutions of the motor.

Moreover, since stretching stresses are repeatedly loaded on vibration insulator rubbers, the rubbers should have a prolonged stretch fatigue life. They should also have a good kneading processability in rubber processing.

Vibration insulator rubbers of ethylene-α-olefin-non-conjugated diene copolymer are usually produced by kneading the copolymer composition with carbon black and a process oil. If the intrinsic viscosity of the copolymer composition used in this process is too high, the copolymer composition suffers poor kneading processability, while, if the intrinsic viscosity of the copolymer composition is too low, the resulting rubbers will have a high dynamic/static ratio and a short stretch fatigue life.

In the case where ethylene-α-olefin-non-conjugated diene copolymers with a high intrinsic viscosity are used for the production of vibration insulator rubbers, a relatively large amount of extension oil, namely 70 to 120 parts by weight per 100 parts by weight of the copolymer composition, is usually added to the compositions to adjust their intrinsic viscosity. If the amount of added extension oil is too small, the resulting oil-extended copolymer composition will suffer from not only a low Mooney viscosity but also a low kneading processability, and the copolymer rubber compositions will become difficult to dry in the manufacturing process. On the other hand, if a large amount of extension oil is added, the amount of carbon black must be increased to keep the static spring constant of the copolymer rubbers at an adequate level.

With regard to the relationship between the amount of carbon black and the dynamic/static ratio, it has been known that the dynamic/static ratio of the resulting copolymer rubber decreases as the amount of carbon black is decreased. However, when conventional copolymer rubber compositions containing a large amount of extension oil are used, the amount of carbon black can not be reduced since the static spring constant of the copolymer rubber needs to be kept to a sufficient level.

As a means for reducing the amount of carbon black, a blending of non-oil-extended rubber composition having a low molecular weight has been known, but this method has, however, a defect that the blending of the rubber composition with a low molecular weight reduces the average molecular weight of the resulting rubber composition and hence increases the dynamic/static ratio, thereby setting off the effect of reduction of the amount of carbon black.

Accordingly, the amount of extension oil to be added to the copolymer composition is limited to a very specific range, and the kneading processability of the rubber composition and the dynamic/static ratio of the vibration insulator rubber can be maintained in an acceptable range only when the amount of the extension oil is within a certain specific range.

Under these circumstances, the present inventors have investigated how to manufacture vibration insulator rubbers with a good dynamic/static ratio and a prolonged stretch fatigue life, and how to provide vulcanizable ethylene-α-olefin-non-conjugated diene copolymer rubber compositions with good kneading processability from which said vibration insulator rubbers can be produced.

As a result, the inventors have found that vibration insulator rubbers which have an excellent low dynamic/static ratio as well as a prolonged stretch fatigue life can be prepared from an ethylene-α-olefin-non-conjugated diene copolymer rubber composition comprising:

(A) an oil-extended ethylene-α-olefin-non-conjugated diene copolymer wherein the copolymer has an intrinsic viscosity [η] of 2.7 to 3.8 measured in xylene at 70°C prior to oil extension, and the amount of the extension oil is in the range from 30 to 50 parts by weight per 100 parts by weight of the ethylene-α-olefin-non-conjugated diene copolymer;

(B) carbon black in an amount of 50 to 100 parts by weight per 100 parts by weight of the ethylene-α-olefin-non-conjugated diene copolymer; and

(C) process oil in an amount of 1/8 to 1/2 part by weight per 1 part by weight of the carbon black.

It has also been found that said ethylene-α-olefin-non-conjugateddiene copolymer rubber composition is excellent in kneading processability.

Accordingly, the present invention provides an ethylene-α-olefin-non-conjugated diene copolymer rubber composition comprising:

(A) an oil-extended ethylene-α-olefin-non-conjugated diene copolymer wherein the copolymer has an intrinsic viscosity [η] of 2.7 to 3.8 measured in xylene at 70°C prior to oil extension, and the amount of the extension oil is in the range from 30 to 50 parts by weight per 100 parts by weight of the ethylene-α-olefin-non-conjugated diene copolymer;

(B) carbon black in an amount of 50 to 100 parts by weight per 100 parts by weight of the ethylene-α-olefin-non-conjugated diene copolymer; and

(C) process oil in an amount of 1/8 to 1/2 part by weight per 1 part by weight of the carbon black.

It also provides a vibration insulator rubber having a low dynamic/static ratio as well as a prolonged stretch fatigue life which is obtainable from a vulcanizable rubber composition comprising said ethylene-α-olefin-non-conjugated diene copolymer rubber composition and a vulcanizing agent, and a process for producing a vibration insulator rubber which comprises vulcanizing, with a suitable vulcanizing agent, said ethylene-α-olefin-non-conjugateddiene copolymer rubber composition.

The α-olefins used for the ethylene-α-olefin-non-conjugated diene copolymers of the present invention include, for example, propylene, 1-butene, 1-pentene, 1-hexene, 4-methyl-1-pentene, 1-octene and 1-decene, of which propylene is preferred.

The non-conjugated dienes used for the ethylene-α-olefin-non-conjugated diene copolymers include, for example, linear non-conjugated dienes such as 1,4-hexadiene, 1,6-octadiene, 2-methyl-1,5-hexadiene, 6-methyl-1,5-heptadiene, 7-methyl-1,6-octadiene; cyclic non-conjugated dienes such as cyclohexadiene, dicyclopentadiene, methyltetrahydroindene, 5-vinylnorbornene, 5-ethylidene-2-norbornene, 5-methylene-2-norbornene,5-isopropylidene-2-norbornene, 6-chloromethyl-5-isopropenyl-2-norbornene and the like; and trienes such as 2, 3-diisopropylidene-5-norbornene, 2-ethylidene-3-isopropylidene-5-norbornene, 2-propenyl-2,2-norbornadiene, 1,3,7-octatriene, 1,4,9-decatriene and the like. Of these, 1,4-hexadiene, dicyclopentadiene, and 5-ethylidene-2-norbornene are preferred. These non-conjugated dienes may be used alone or in combinations thereof.

The ethylene-α-olefin-non-conjugated diene copolymers used in the present invention have an intrinsic viscosity [η] of 2.7 to 3.8, preferably 2.8 to 3.5, measured at 70°C in xylene prior to the oil extension.

The weight ratio of ethylene/ α-olefin in the ethylene-α-olefin-non-conjugated diene copolymer is 45/55 to 85/15, preferably 50/50 to 70/30. If the weight ratio of ethylene to copolymer is too low, the stretch fatigue life can become shorter than preferred. On the other hand, if the weight ratio of ethylene to copolymer is too high, the dynamic/static ratio at -20°C may become higher than preferred.

As for the amount of the non-conjugated diene of the ethylene-α-olefin-non-conjugated diene copolymer used in the invention, the copolymer preferably has an iodine value of 5 to 30, preferably 6 to 25. If the amount of the non-conjugated diene is too small, the rate of vulcanization decreases, and hence the vulcanization takes a longer time, resulting in lower productivity. On the other hand, when the amount of the non-conjugated diene is in excess, the stretch fatigue life becomes shorter.

In the invention, copolymer rubbers other than those of the invention, e.g. non-oil-extended ethylene-α-olefin-non-conjugated diene copolymer rubbers, may be used in combination with this invention so long as the effects of the invention are not impeded.

In preparing the oil-extended ethylene-α-olefin-non-conjugated diene copolymer, an extension oil is mixed with the copolymer in 30 to 50 parts by weight per 100 parts by weight of the copolymer. As the extension oil and/or process oil, paraffinic oil, naphthenic oil, aromatic oil, etc., may be used, but paraffinic oil is preferred.

3

The ethylene-α-olefin-non-conjugated diene copolymer rubber composition can be obtained by kneading the oil-extended ethylene-α-olefin-non-conjugated diene copolymer with said amount of carbon black and a process oil.

As the carbon black used in the present invention, there is no particular limitation, but any conventional ones may be used. In this invention, the carbon black is blended in an amount of from 50 to 100 parts by weight, preferably from 60 to 90, more preferably from 70 to 80 parts by weight, per 100 parts by weight of the ethylene-α-olefin-non-conjugated diene copolymer.

The amount of the process oil is 1/8 to 1/2 part by weight per 1 part by weight of the carbon black. If the amount of the process oil is insufficient, it becomes difficult to sufficiently mix carbon black with the copolymer, and hence the kneading takes a longer time.

The rubber composition of the invention can be used for the production of vibration insulator rubbers.

In the process for the production of vibration insulator rubbers, vulcanizable rubber compositions are first prepared by kneading said oil-extended ethylene-α-olefin-non-conjugated diene copolymer, said amount of carbon black, a process oil and a suitable amount of a vulcanizing agent such as organic peroxide or sulfur and, if necessary, a vulcanization promoter, a suitable additive and/or auxiliaries such as antioxidants, processing aids, stearic acid, reinforcing agents, fillers, plasticizers and softening agents may be added thereto. These ingredients are mixed with conventional kneaders, such as rollers or a Banbury mixer, to form vulcanizable rubber compositions.

The thus obtained vulcanizable rubber compositions are then vulcanized at temperatures not lower than 120°C, and preferably 150 to 220 °C, for about 1 to 30 minutes to obtain a vulcanized rubber. The vulcanization may, for example, be performed by press vulcanization, steam vulcanization or injection molding vulcanization, and vulcanization may be carried out with sulfur or organic peroxides.

The vulcanized rubber compositions thus obtained from the vulcanizable rubber compositions of the invention retain the excellent properties inherent to ethylene-α-olefin-non-conjugated diene copolymer rubbers such as good thermal aging resistance, ozone resistance and polar solvent resistance and also exhibit an excellent dynamic/static ratio and a long stretch fatigue life.

In a preferred embodiment, the dynamic/static ratio is less than 1.70 when the dynamic modulus of elasticity is measured at a vibration frequency of 100 Hz, an amplitude of ± 0.1% and a temperature of 24°C and the static modulus of elasticity is calculated from the 25% modulus determined according to the method of JIS K-6386.

Also in a preferred embodiment, the stretch fatigue life is greater than $21.5 \times 10^4$ cycles until failure tested at 140% elongation. The tensile strength is also improved and in a preferred embodiment is greater than 19.2 MPa(196 Kgf/cm$^2$), more preferably greater than or equal to 19.5 MPa(199Kgf/cm$^2$).

Making use of these characteristic features, the vulcanized rubber compositions of the present invention can be used in various fields, for example, as vibration insulator rubbers for automotive engine mount, muffler hangers for automobiles, vibration insulator rubbers for washing machines, and the like.

Examples

The present invention will be more precisely described by the following examples, but it is not intended to limit the present invention thereto.

Production of copolymers:

The oil-extended copolymers of the present invention were prepared in the following manner:

4.5 kg/hour of hexane, 0.3 kg/hour of ethylene, 1.0 kg/hour of propylene, 0.025 kg/hour of ethylidene-2-norbornene and 0.01 mole% of hydrogen were fed in an autoclave( 10 liters) equipped with an agitator, and polymerized at a temperature of 40 °C, while continuously feeding 0.002 moles/hour of vanadium oxytrichloride and 0.07 moles/hour of ethylaluminium sesqui-chloride as catalysts.

The resulting reaction solution was continuously withdrawn into a drum and 0.5 parts by weight of a polymerization terminator and 40 parts by weight of a process oil per 100 parts weight of the resulting copolymer in the solution were added thereto. Thereafter, oil-extended copolymer was allowed to precipitate by steam stripping and dried to give 460 g/hour of the oil-extended copolymer. The thus obtained copolymer rubber had an ethylene content of 62 wt% and an iodine value of 10. In the same manner, the oil-extended ethylene-propylene-ethylidene-2-norbornene copolymers used in the invention can be obtained.

Examples 1 ~ 7 and Comparative Examples 1 ~ 7

Each of the oil-extended ethylene-propylene-ethylidene-2-norbornene copolymers, carbon black (Seast-V of Tokai Carbon Co., Ltd.) and process oil (Diana PW-90 of Idemitsu) in such amounts as shown in Tables 1 and 3 were kneaded with 5 parts by weight of zinc flower (Zinc Flower No. 3 of Hakusui Chemical Industries Ltd.) and 1 part by weight of stearic acid (Industrial Stearic Acid of New Japan Chemical Co., Ltd.) with a BB-type mixer (1.5 liters). Subsequently, the other ingredients including 2 parts by weight of Soxinol BZ (vulcanization promoter, zinc di-n-butylthiocarbamate, Sumitomo Chemical CO.,LTD.), 0.5 parts by weight of Soxinol TT (vulcanization promoter, tetramethylthiuram sulfide, Sumitomo Chemical CO.,LTD.), 1.2 parts by weight of Soxinol M (vulcanization promoter, 2-mercaptobenzothiazole, Sumitomo Chemical CO.,LTD. ) and 1.0 part of sulfur were mixed with the resulting compositions with 8 inch(20cm) open rolls.

The viscosities of the resulting compositions were measured according to the method of JIS K6300. Intrinsic viscosity $[\eta]$ of a copolymer is measured at 70°C using xylene. Thereafter, the compositions were vulcanized with a hot press at 160°C for 20 minutes to give 2 mm thick vulcanized sheets, of which physical properties were measured according to the method of JIS K6301. Other properties of the compositions were measured according to the following procedures:

(1) Dynamic/Static Ratio

The static modulus of elasticity (Ks) was calculated from the 25% modulus determined according to the method of JIS K-6386.

The dynamic modulus of elasticity (Kd100) was measured with a viscoelastic spectrometer of Iwamoto Seisakusho K.K. under conditions of a vibration frequency of 100 Hz, an amplitude of ± 0.1 % and a temperature of 24 °C. The dynamic/static ratio is calculated from the formula:

Kd100/Ks

(2) Stretch Fatigue Life

A fatigue to failure tester ( Monsanto Co.) was used to measure the number of stretch cycles before the breakage of a sample under conditions of an elongation percentage of 140 %.

(3) Kneading Processability

A copolymer, carbon black, a process oil, zinc flower and stearic acid were kneaded for 3 minutes with a BB-II mixer, and the resulting composition was formed into a sheet with 8 inch(20cm) open rolls (gap: 2.5 mm), whereupon the state of edge trimming of the compound was visually observed and evaluated.

The results are given in Tables 2 and 4.

Table 1

EP 0 621 309 A1

Components

| Example No. | 1 | 2 | 3 | 4 | 5 | 6 | 7 |
|---|---|---|---|---|---|---|---|
| Properties of Copolymer | | | | | | | |
| Intrinsic Viscosity [ $\eta$ ] dl/g : | 3.1 | 3.1 | 3.1 | 3.2 | 2.9 | 3.3 | 2.8 |
| Weight Ratio of Ethylene/Propylene: | 62/38 | 62/38 | 62/38 | 50/50 | 69/31 | 67/33 | 65/35 |
| Iodine Value : | 10 | 10 | 10 | 9 | 18 | 6 | 11 |
| Amount of oil-extended copolymer | 150 | 140 | 130 | 140 | 140 | 140 | 140 |
| Amount of Extension Oil * 1 | 50 | 40 | 30 | 40 | 40 | 40 | 40 |
| Amount of Carbon black | 80 | 80 | 80 | 80 | 80 | 80 | 80 |
| Amount of Process Oil | 15 | 25 | 35 | 25 | 25 | 25 | 25 |

* 1: per 100 parts by weight of copolymer

Table 2

EP 0 621 309 A1

### Evaluation of rubber composition

| Example No. | 1 | 2 | 3 | 4 | 5 | 6 | 7 |
|---|---|---|---|---|---|---|---|
| Viscosity ( $ML_{1+4}$ 100 ℃ ) : | 86 | 85 | 86 | 85 | 86 | 89 | 74 |
| Kneading Processability : | good | good | good | good | good | good | excellent |

### Evaluation of vulcanized rubber composition

| | 1 | 2 | 3 | 4 | 5 | 6 | 7 |
|---|---|---|---|---|---|---|---|
| Tensile Strength ( MPa ) | | 20.8 | 20.4 | 20.7 | 19.5 | 22.1 | 21.2 | 19.2 |
| (Kgf/cm² ) : | ( 212 ) | ( 208 ) | ( 211 ) | ( 199 ) | ( 226 ) | ( 216 ) | ( 196 ) |
| Elongation(%) : | 660 | 670 | 650 | 700 | 600 | 760 | 720 |
| Dynamic/Static Ratio ($K_{d100}/K_s$ ) : | 1.52 | 1.50 | 1.49 | 1.61 | 1.69 | 1.63 | 1.68 |
| Stretch Fatigue Life $10^4$ cycles : | 26.1 | 23.3 | 25.5 | 26.2 | 21.7 | 30.4 | 21.8 |

Table 3

Components

| Comparative Example No. | 1 | 2 | 3 | 4 | 5 | 6 | 7 |
|---|---|---|---|---|---|---|---|
| Amount of oil-extended copolymer | 170 | 170 | 170 | 140 | 140 | 136 + 20 * 2 | 85 + 50 * 2 |

Properties of Copolymer

| | 1 | 2 | 3 | 4 | 5 | 6 | 7 |
|---|---|---|---|---|---|---|---|
| Intrinsic Viscosity $[\eta]$ dl/g : | 3.1 | 3.1 | 3.1 | 2.6 | 2.6 | 3.1 + 1.0 | 3.1 + 1.0 |
| Weight Ratio of Ethylene/Propylene: | 62/38 | 62/38 | 62/38 | 59/41 | 59/41 | 62/38 + 56/44 | 62/38 + 56/44 |
| Iodine Value : | 10 | 10 | 10 | 9 | 9 | 10 + 20 | 10 + 20 |

| | 1 | 2 | 3 | 4 | 5 | 6 | 7 |
|---|---|---|---|---|---|---|---|
| Amount of Extension Oil * 1 | 70 | 70 | 70 | 40 | 40 | 70 — | 70 — |
| Amount of Carbon black | 100 | 120 | 85 | 80 | 60 | 80 | 80 |
| Amount of Process Oil | 5 | 15 | 0 | 25 | 5 | 4 | 25 |

* 1: per 100 parts by weight of copolymer

* 2: non-oil-extended copolymer($[\eta]$ dl/g=1.0, Ethylene/Propylene=56/44, Iodine value=20) was added in an amount 20, and 50 parts for Comparative Examples 6 and 7, respectively.

Table 4

Evaluation of rubber composition

| Comparative Example No. | 1 | 2 | 3 | 4 | 5 | 6 | 7 |
|---|---|---|---|---|---|---|---|
| Viscosity ( ML₁₊₄ 100 °C ) | 78 | 67 | 83 | 80 | 73 | 81 | 75 |
| Kneading Processability | poor | good | poor | good | poor | poor | good |

Evaluation of vulcanized rubber composition

| | 1 | 2 | 3 | 4 | 5 | 6 | 7 |
|---|---|---|---|---|---|---|---|
| Tensile Strength (MPa) | 17.5 | 18.7 | 18.8 | 17.6 | 19.4 | 18.1 | 17.1 |
| (Kgf/cm²) | ( 178 ) | ( 191 ) | ( 192 ) | ( 180 ) | ( 198 ) | ( 185 ) | ( 174 ) |
| Elongation(%) | 680 | 670 | 640 | 710 | 630 | 690 | 720 |
| Dynamic/Static Ratio ( $K_{d100}/K_{s}$ ) | 2.08 | 1.92 | 1.73 | 1.88 | 1.82 | 1.74 | 1.86 |
| Stretch Fatigue Life 10⁴ cycles | 17.0 | 10.6 | 21.3 | 9.3 | 19.6 | 18.2 | 13.1 |

As is clear from Table 2, which shows the properties of the compositions of the present inventions, the rubber compositions of the present invention have good kneading processability and the vulcanized rubbers obtained therefrom have a low dynamic/static ratio and a prolonged stretch fatigue life.

On the other hand, the composition of Comparative Example 1, which contains relatively large amounts of extension oil and carbon black, and hence is treated with a small amount of process oil, has poor kneading processability and a high dynamic/static ratio.

In Comparative Example 2, the amounts of the process oil and carbon black are larger than those of Comparative Example 1. The resulting rubber has a poor dynamic/static ratio and a shorter stretch fatigue life.

In the composition of Comparative Example 3, no process oil was used, and the kneading processability of the composition is poor.

In Comparative Example 4, an oil-extended copolymer having a low intrinsic viscosity is used, resulting in a poor dynamic/static ratio and a shorter stretch fatigue life.

In Comparative Example 5, a small amount of process oil is used in combination with the oil-extended copolymer having a low intrinsic viscosity, resulting in poor kneading processability and a high dynamic/static ratio.

In Comparative Example 6, an oil-extended copolymer with an excess of the extension oil is blended with a non-oil-extended copolymer in order to reduce the amount of carbon black. The amount of the process oil relative to the amount of carbon is small, resulting in poor kneading processability.

In Comparative Example 7, the mixed copolymer of an oil-extended copolymer with an excess of the extension oil and a relatively large amount of a non-oil-extended copolymer has a low average molecular weight $[\eta]$, which results in a high dynamic/static ratio.

## Claims

1. An ethylene-$\alpha$-olefin-non-conjugated diene copolymer rubber composition comprising:
   (A) an oil-extended ethylene-$\alpha$-olefin-non-conjugated diene copolymer wherein the copolymer has an intrinsic viscosity $[\eta]$ of 2.7 to 3.8 measured in xylene at 70°C prior to oil extension, and the amount of the extension oil is in the range from 30 to 50 parts by weight per 100 parts by weight of the ethylene-$\alpha$-olefin-non-conjugated diene copolymer;
   (B) carbon black in an amount of 50 to 100 parts by weight per 100 parts by weight of the ethylene-$\alpha$-olefin-non-conjugated diene copolymer; and
   (C) process oil in an amount of 1/8 to 1/2 part by weight per 1 part by weight of the carbon black.

2. The copolymer rubber composition of claim 1 wherein the ratio by weight of ethylene/$\alpha$-olefin in the ethylene-$\alpha$-olefin-non-conjugated diene copolymer is 45/55 to 85/15, and the iodine value of the copolymer is 5 to 30.

3. The copolymer rubber composition of claim 1 or 2 wherein the amount of carbon black is 60 to 90 parts by weight per 100 parts by weight of the ethylene-$\alpha$-olefin-non-conjugated diene copolymer.

4. The copolymer rubber composition of claim 1 or 2, wherein the ethylene-$\alpha$-olefin-non-conjugated diene copolymer is ethylene-propylene-ethylidene-2-norbornene copolymer.

5. The copolymer rubber composition of any one of claims 1 to 4 which further comprises a vulcanizing agent and, optionally, a vulcanization promoter, a vulcanizable rubber composition additive and/or a vulcanizable rubber composition auxiliary.

6. A vibration insulator rubber which is obtainable from the vulcanizable copolymer rubber composition of claim 5.

7. The vibration insulator rubber of claim 6 wherein the amount of carbon black is 70 to 80 parts by weight per 100 parts of the ethylene-$\alpha$-olefin-non-conjugated diene copolymer.

8. A process for producing a vibration insulator rubber which comprises vulcanizing the vulcanizable copolymer rubber composition of claim 5.

9. Use of the vibration insulator rubber of claim 6 or 7 as an automotive engine mount or muffler mount.

10. Use of the vibration insulator rubber of claim 6 or 7 as a vibration insulator in a washing machine.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| P,X | DATABASE WPI<br>Section Ch, Week 9409,<br>Derwent Publications Ltd., London, GB;<br>Class A17, AN 94-072062<br>& JP-A-6 025 484 (SUMITOMO) 1 February 1994<br>* abstract * | 1-10 | C08L23/16<br>C08K3/04<br>//(C08L23/16,<br>  C08L91:00,<br>  C08K3:04) |
| X | DATABASE WPI<br>Section Ch, Week 7815,<br>Derwent Publications Ltd., London, GB;<br>Class A17, AN 78-27844A<br>& JP-A-53 022 551 (SUMITOMO CHEM) 2 March 1978<br>* abstract * | 1-10 | |
| X | DATABASE WPI<br>Section Ch, Week 9003,<br>Derwent Publications Ltd., London, GB;<br>Class A88, AN 90-019507<br>& JP-A-1 299 806 (TOKAI RUBBER) 4 December 1989<br>* abstract * | 1-10 | |
| X | DATABASE WPI<br>Section Ch, Week 9146,<br>Derwent Publications Ltd., London, GB;<br>Class A17, AN 91-336950<br>& JP-A-3 227 343 (ASAHI CARBON) 8 October 1991<br>* abstract * | 1-10 | **TECHNICAL FIELDS SEARCHED** (Int.Cl.5)<br><br>C08L<br>C08K |
| X | EP-A-0 275 925 (SUMITOMO CHEMICAL)<br>* claims 1,5,15,16. * | 1-10 | |
| A | US-A-3 699 071 (I.W. MILLS ET AL)<br>Abstract<br>* column 4, line 68 - line 75 * | 1 | |

-/--

The present search report has been drawn up for all claims

| Place of search | Date of completion of the search | Examiner |
|---|---|---|
| THE HAGUE | 22 August 1994 | Goovaerts, R |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-3 926 901 (C.E. BOOZER)<br>* column 1, line 51 - column 4, line 68 *<br>--- | 1 | |
| A | US-A-4 159 027 (P.G. CAILLET)<br>Abstract<br>* column 1, line 19 - line 24 *<br>----- | 1-8 | |

TECHNICAL FIELDS
SEARCHED      (Int.Cl.5)

The present search report has been drawn up for all claims

| Place of search | Date of completion of the search | Examiner |
|---|---|---|
| THE HAGUE | 22 August 1994 | Goovaerts, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)